(19) Europäisches Patentamt
European Patent Office
Office européen des brevets

(11) **EP 4 450 460 A1**

(12) **EUROPEAN PATENT APPLICATION**

(43) Date of publication:
**23.10.2024 Bulletin 2024/43**

(21) Application number: **24158567.8**

(22) Date of filing: **20.02.2024**

(51) International Patent Classification (IPC):
**C01B 33/32** (2006.01)

(52) Cooperative Patent Classification (CPC):
**H01M 4/625; C01B 33/32; H01M 4/0471;**
**H01M 4/366; H01M 4/386; H01M 4/5825;**
**H01M 4/587; H01M 10/0525;** H01M 2004/027;
H01M 2004/028; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.02.2023 KR 20230023435**

(71) Applicant: **SK On Co., Ltd.**
**Seoul 03161 (KR)**

(72) Inventors:
• **KIM, Nak Won**
**34124 Daejeon (KR)**
• **MOON, Joon Hyung**
**34124 Daejeon (KR)**
• **PARK, Eun Jun**
**34124 Daejeon (KR)**
• **CHUNG, Ju Ho**
**34124 Daejeon (KR)**

(74) Representative: **Stolmár & Partner**
**Patentanwälte PartG mbB**
**Blumenstraße 17**
**80331 München (DE)**

(54) **ANODE ACTIVE MATERIAL FOR LITHIUM SECONDARY BATTERY AND LITHIUM SECONDARY BATTERY INCLUDING THE SAME**

(57)    An anode active material for a secondary battery according to an embodiment includes comprising a lithium-silicon oxide particle that contains $Li_2Si_2O_5$ and has a phase fraction ratio of 1.0 or less. A content of lithium elements on a surface of the lithium-silicon oxide particle measured through an X-ray photoelectron spectroscopy (XPS) analysis based on the total number of atoms on the surface of the lithium-silicon oxide particle measured through the XPS analysis is 10 atomic% or less.

FIG. 1

**Description**

BACKGROUND

1. Field

The disclosure of this patent application relates to an anode active material for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery has been developed and applied as a power source for an eco-friendly vehicle such as an electric vehicle.

Examples of the secondary battery includes, e.g., a lithium secondary battery, a nickel-cadmium battery, a nickel-hydrogen battery, etc. The lithium secondary battery has been actively developed and applied due to high operational voltage and energy density per unit weight, a high charging rate, a compact dimension, etc.

Recently, as an application range of the lithium secondary battery is expanded, the lithium secondary battery having higher capacity and power has been researched. For example, a silicon-based material such as a silicon oxide having high capacity may be used as an anode active material.

However, the silicon oxide may cause gas generation in an aqueous slurry state and may degrade life-span properties of the lithium secondary battery.

SUMMARY

According to an aspect of the present disclosure, there is provided an anode active material for a lithium secondary battery having improved initial efficiency and life-span property.

According to an aspect of the present invention, there is provided a method of preparing an anode active material for a lithium secondary battery having improved initial efficiency and life-span property.

According to an aspect of the present invention, there is provided a lithium secondary battery having improved initial efficiency and life-span property.

An anode active material for a lithium secondary battery includes a lithium-silicon oxide particle that contains $Li_2Si_2O_5$ and has a phase fraction ratio of 1.0 or less defined by Equation 1. A content of lithium elements on a surface of the lithium-silicon oxide particle measured through an X-ray photoelectron spectroscopy (XPS) analysis based on the total number of atoms on the surface of the lithium-silicon oxide particle measured through the XPS analysis is 10 atomic% or less.

$$[\text{Equation 1}]$$

$$\text{Phase fraction ratio} = \text{I(213)/I(225)}$$

In Equation 1, I(213) is a phase fraction of $Li_2SiO_3$ obtained by a Rietveld Refinement using an X-ray diffraction (XRD) analysis, and I(225) is a phase fraction of $Li_2Si_2O_5$ obtained by the Rietveld Refinement using the XRD analysis.

In some embodiments, the phase fraction ratio may be in a range from 0.1 to 1.0.

In some embodiments, a content of lithium elements contained in the lithium-silicon oxide particle may be in a range from 2 wt% to 10 wt% based on a total weight of the lithium-silicon particle.

In some embodiments, the lithium-silicon oxide particle may include a carbon coating formed on at least a portion of a surface portion thereof.

In some embodiments, a content of carbon elements on the surface of the lithium-silicon oxide particle measured through the XPS analysis based on the total number of atoms on the surface of the lithium-silicon oxide particle measured through the XPS analysis may be 70 atomic% or more.

In some embodiments, a graphite-based particle containing natural graphite and/or artificial graphite may be further included.

In some embodiments, a content of the lithium-silicon oxide particle may be in a range from 5 wt% to 40 wt% based on a total weight of the lithium-silicon oxide particle and the graphite-based particle.

A lithium secondary battery includes a cathode and an anode facing the cathode and including the anode active material for a lithium secondary battery according to the above-described embodiments.

In a method of preparing an anode active material for a lithium secondary battery, a silicon source and a lithium source are mixed to form a mixture. The mixture is fired to prepare a lithium-silicon oxide particle containing $Li_2Si_2O_5$. The lithium-silicon oxide particle has a phase fraction ratio of 1.0 or less defined by Equation 1.

$$[\text{Equation 1}]$$

$$\text{Phase fraction ratio} = I(213)/I(225)$$

In Equation 1, I(213) is a phase fraction of $Li_2SiO_3$ obtained by a Rietveld Refinement using an X-ray diffraction (XRD) analysis, and I(225) is a phase fraction of $Li_2Si_2O_5$ obtained by the Rietveld Refinement using the XRD analysis.

In some embodiments, the silicon source may include a silicon particle and a SiO2 particle.

In some embodiments, the lithium source may include LiOH, Li, LiH, $Li_2O$ and/or $Li_2CO_3$.

In some embodiments, a ratio (Li/Si) of the number of moles of lithium elements contained in the lithium source relative to the number of moles of silicon elements contained in the silicon source may be in a range from 0.1 to 0.7.

In some embodiments, a carbon source gas may be introduced during the firing to form a carbon coating on at least a portion of a surface of the lithium-silicon oxide particle.

In some embodiments, the carbon source gas may include a methane gas, an ethylene gas, an acetylene gas, an ethane gas, a liquefied petroleum gas and/or a propylene gas.

In some embodiments, the firing may be performed at a temperature in a range from 800°C to 1000°C.

An anode active material preparing by a method that includes forming a mixture by a silicon source and a lithium source are mixed, and firing the mixture to prepare a lithium-silicon oxide particle containing $Li_2Si_2O_5$ is provided. The lithium-silicon oxide particle has the phase fraction ratio of 1.0 or less.

According to an embodiment of the present disclosure, life-span properties of an anode active material for a lithium secondary battery may be improved, and a gas generation in an aqueous slurry state may be suppressed.

According to an embodiment of the present disclosure, a residual lithium on a surface of a lithium-silicon oxide particle may be reduced. Accordingly, the gas generation in a slurry state of the anode active material may be suppressed and the life-span properties of the lithium secondary battery may be improved.

The anode active material and the lithium secondary battery of the present disclosure may be widely applied in green technology fields such as an electric vehicle, a battery charging station, a solar power generation, a wind power generation, etc., using a battery. The anode active material and the lithium secondary battery according to the present disclosure may be used for eco-friendly electric vehicles and hybrid vehicles to prevent a climate change by suppressing air pollution and greenhouse gas emission.

BRIEF DESCRIPTION OF THE DRAWINGS

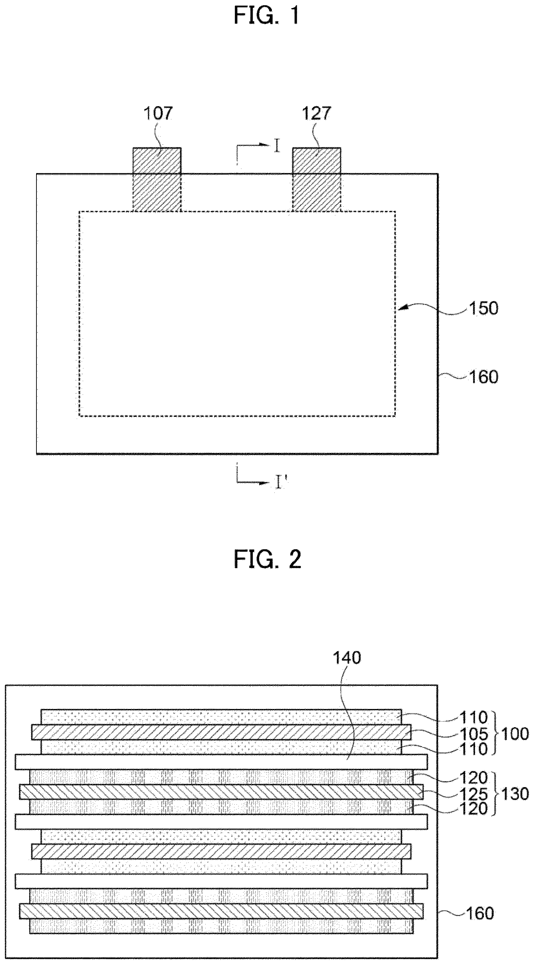

FIGS. 1 and 2 are a schematic plan view and a schematic cross-sectional view illustrating a secondary battery in accordance with exemplary embodiments.

DETAILED DESCRIPTION OF THE EMBODIMENTS

Embodiments of the present disclosure provide an anode active material for a lithium secondary battery including lithium-silicon oxide particles. Additionally, a method of preparing the anode active material for a lithium secondary battery, and a lithium secondary battery including the anode active material for a lithium secondary battery are also provided.

Hereinafter, detailed descriptions of the present disclosure will be described in detail with reference to exemplary embodiments. However, those skilled in the art will appreciate that such embodiments are provided to further understand the spirit of the present inventive concepts and do not limit subject matters to be protected as disclosed in the detailed description and appended claims.

As used herein, the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that the singular forms "a," "an" and "the" are intended to include the plural forms as well, unless the context clearly indicates otherwise.

An anode active material for a lithium secondary battery (hereinafter, that may be abbreviated as an anode active material) includes a lithium-silicon oxide particle. For example, the anode active material may include a plurality of the lithium-silicon oxide particle.

For example, the anode active material may further include a silicon oxide (SiOx, 0<x<2). Accordingly, power properties may be enhanced while achieving capacity properties.

The lithium-silicon oxide particle includes $Li_2Si_2O_5$.

In some embodiments, the lithium-silicon oxide particle include $Li_2Si_2O_5$, and may optionally further include $Li_2SiO_3$.

For example, $Li_2Si_2O_5$ may be structurally and chemically more stable than $Li_2SiO_3$, thereby suppressing a gas generation in a slurry state and improving life-span properties of a lithium secondary battery.

For example, when a $Li_2SiO_3$ phase is excessively included, initial efficiency may be higher than when a $Li_2Si_2O_5$ phase is excessively included, but the gas generation when contacting water may be increased and the life-span properties of the lithium secondary battery may be degraded.

A phase fraction ratio of the lithium-silicon oxide particles defined by Equation 1 below is 1.0 or less.

$$[\text{Equation 1}]$$

$$\text{Phase fraction ratio} = I(213)/I(225)$$

In Equation 1, I(213) is a phase fraction of $Li_2SiO_3$ obtained by a Rietveld refinement through an X-ray diffraction (XRD) analysis, and I(225) is a phase fraction of $Li_2Si_2O_5$ obtained by the Rietveld refinement through the XRD analysis.

For example, in the Rietveld analysis, an X-ray diffraction pattern obtained by actually measuring a target material may be compared with an X-ray diffraction pattern of a sample having a known structural information to measure a phase fraction and/or a lattice structure. If the target material contains two or more crystalline phases, the phase fraction of each phase can be obtained by assuming a sum of all phase fractions is 100%.

For example, after measuring the X-ray diffraction pattern of the target material, the phase fraction and/or the lattice structure of each phase can be obtained by being compared with a diffraction pattern of the target material registered in an online database (DB).

For example, the phase fraction of each of Si, $Li_2Si_2O_5$ and $Li_2SiO_3$ are calculated through the Rietveld analysis, the phase fraction ratio may be obtained by substituting the calculation results into Equation 1 above.

For example, the phase fractions can be measured based on a reference code ICSD 98-024-6975 for Si, ICSD 98-010-0402 for $Li_2SiO_3$ and ICSD 98-001-5414 for $Li_2Si_2O_5$ registered in the online database (Inorganic Crystal Structure Database, ICSD).

For example, a Si crystalline peak may be at least one of about 28.2°, 47.0° and 55.7°, and a $Li_2SiO_3$ crystalline peak may be at least one of about 18.9°, 19.0°, 27.0°, 33.0° and 38.6°, and a $Li_2Si_2O_5$ crystalline peak may be at least one of about 23.8°, 24.3°, 24.8° and 37.5°.

In the above phase fraction ratio range, the $Li_2Si_2O_5$ phase may be formed in an excess amount relatively to the $Li_2SiO_3$ phase. Accordingly, the life-span properties of the anode active material may be improved.

In some embodiments, the phase fraction ratio of the lithium-silicon oxide particle defined by Equation 1 is in a range from 0.1 to 1.0. In one embodiment, the phase fraction ratio may be in a range from 0.3 to 0.7. Within the above range, the life-span properties can be improved while preventing a reduction of the initial efficiency of the lithium secondary battery.

For example, a first firing of a silicon source may be performed to form a silicon oxide. The silicon oxide and a lithium source may be mixed, and a second firing process may be performed to form the lithium-silicon oxide particles. However, in this case, the $Li_2SiO_3$ phase may be excessively formed and the $Li_2Si_2O_5$ phase may not be sufficiently formed.

According to embodiments of the present disclosure, the silicon source and the lithium source may be mixed to form a mixture, and the mixture may be calcined to form the lithium-silicon oxide particles.

The $Li_2Si_2O_5$ phase may be sufficiently formed by mixing the silicon source and the lithium source together, and then performing the firing (a single firing process).

For example, a residual lithium may be generated on the surface of the lithium-silicon oxide particle. In this case, side reactions with an electrolyte solution may be increased, thereby reducing the life-span properties and causing a gas generation in a slurry state.

In example embodiments, a content of lithium elements on the surface of the lithium-silicon oxide particle measured by an X-ray photoelectron spectroscopy (XPS) analysis relative to the total number of atoms on the surface of the lithium-silicon oxide particle measured by the XPS analysis is 10 atomic% or less. Within the above range, the residual lithium on the surface of the lithium-silicon oxide particle may be reduced. Accordingly, the gas generation in the slurry state of the anode active material may be suppressed, and the life-span properties of the lithium secondary battery may be improved.

In some embodiments, a content of the lithium elements included in the lithium-silicon oxide particle may be in a range from 2 weight percent (wt%) to 10 wt% or in a range from 4 wt% to 9 wt% based on a total weight of the lithium-silicon oxide particle. In the above range, the $Li_2SiO5$ phase may be sufficiently formed while preventing the lithium content from being excessively increased. Accordingly, power properties may be improved while maintaining capacity properties of the anode active material.

In some embodiments, the lithium-silicon oxide particles may further include a carbon coating formed at least partially on the surface thereof. Accordingly, swelling of the anode active material during charging and discharging may be suppressed, and thus the life-span properties may be further improved. Additionally, a surface portion of the lithium-silicon oxide particle may be protected by the carbon coating, so that the gas generation in the aqueous slurry state may be prevented.

For example, the carbon coating may include an amorphous carbon.

For example, the carbon coating may include at least one selected from the group consisting of soft carbon, hard carbon, a mesophase pitch oxide and a pyrolyzed coke.

In some examples, a content of the carbon coating may be in a range from 1 wt% to 25 wt% based on a total weight of the lithium-silicon oxide particle. In some embodiments, the content of the carbon coating may be in a range from 2 wt% to 15 wt%. In some embodiments, the content of the carbon coating may be in a range from 3 wt% to 10 wt%. In the above range, the life-span properties of the lithium-silicon oxide particle may be improved and the gas generation may be effectively prevented.

In some embodiments, a content of a carbon element on the surface of the lithium-silicon oxide particle measured by the XPS analysis relative to the total number of atoms on the surface of the lithium-silicon oxide particle measured by the XPS analysis may be 70 atomic% or more, and in one embodiment, 75 atomic% or more. In the above range, the carbon coating may be sufficiently formed on the surface of the lithium-silicon oxide particle so that the above-described effect of suppressing the gas generation and improving the life-span properties may be sufficiently implemented.

In some embodiments, the anode active material may further include a graphite-based particle including at least one selected from the group consisting of natural graphite and artificial graphite.

For example, the graphite-based particle may have an amorphous shape, a plate shape, a flake shape, a spherical shape, and a fiber shape.

In some embodiments, a content of the lithium-silicon oxide particle based on a total weight of the lithium-silicon oxide particle and the graphite-based particle may be in a range from 1wt% to 50 wt% by weight. In some embodiments, the content of the lithium-silicon oxide particles may be in a range from 5 wt% to 40 wt% by weight, and in one embodiment, from 10 wt% to 40 wt%. In the above range, both capacity retention and power properties of the lithium secondary battery may be improved.

The content of the lithium-silicon oxide particles based on a total weight of the anode active material (e.g., the total weight of a plurality of the lithium-silicon oxide particles and the graphite-based particles) may be 1 wt% or more, 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more. The content of the lithium-silicon particles based on the total weight of the anode active material may be 99 wt% or less, 97 wt% or less, 95 wt% or less, 90 wt% or less, 85 wt% or less, 80 wt% or less, 75 wt% or less, 70 wt% or less, 65 wt% or less, 60 wt% or less, 55 wt% or less, or 50 wt% or less.

In an embodiment, the anode active material may substantially consist of the lithium-silicon oxide particles and the graphite-based particles.

Hereinafter, a method of preparing the anode active material for a lithium secondary battery according to example embodiments is provided in more detail.

A silicon source and a lithium source are mixed to form a mixture.

For example, the silicon source may include silicon (Si) particles and $SiO_2$ particles. The silicon source may be mixed in a powder form.

For example, the lithium source may include at least one selected from the group consisting of LiOH, Li, LiH, $Li_2O$ and $Li_2CO_3$.

In some embodiments, a ratio (Li/Si) of the number of moles of lithium elements included in the lithium source relative to the number of moles of silicon elements included in the silicon source in the mixture may be in a range from 0.1 to 0.7. In one embodiment, the ratio (Li/Si) may be in a range from 0.2 to 0.6. In the above range, the life-span properties of the lithium secondary battery may be improved, and the initial efficiency may be further improved.

The mixture is fired to prepare lithium-silicon oxide particles including $Li_2Si_2O_5$.

For example, the firing may be performed by heat-treating the mixture under an inert atmosphere at a temperature from 800°C to 1000°C for 1 hour to 12 hours. In the above temperature range, a generation ratio of structurally and chemically stable lithium-silicon oxide particles (e.g., $Li_2Si_2O_5$) may be increase.

The prepared lithium-silicon oxide particles have the phase fraction ratio defined by Equation 1 or less.

As described above, after mixing the silicon source and the lithium source, the lithium-silicon oxide particles may be formed through a single firing process. From the single firing process, an excess of the $Li_2Si_2O_5$ phase may be formed. Accordingly, the phase fraction ratio may be adjusted to 1.0 or less, thereby improving the life-span properties of the lithium secondary battery.

In a comparative example, a silicon oxide may be formed by a first firing of the silicon source, and then the silicon oxide and the lithium source may be mixed and a second firing may be performed to form a cathode active material. In this case, the lithium source may not sufficiently penetrate into the silicon oxide, so that an excessive amount of the $Li_2SiO_3$ phase may be formed and the $Li_2Si_2O_5$ phase may not be sufficiently formed. Accordingly, the gas generation in the aqueous slurry state may be increased and the life-span properties of the lithium secondary battery may be deteriorated.

In some examples, a carbon source gas may be introduced during the firing of the mixture. Accordingly, a carbon coating may be formed at least partially on the surface of the lithium-silicon oxide particle.

For example, the carbon source gas may include at least one selected from the group consisting of a methane gas, an ethylene gas, an acetylene gas, an ethane gas, a liquefied petroleum gas and a propylene gas.

In an embodiment, the carbon source gas may be a mixed gas of at least one selected from the group consisting of the methane gas, the ethylene gas, the acetylene gas, the ethane gas, the liquefied petroleum gas and the propylene gas, and an argon gas.

For example, the carbon source gas may be continuously injected during the firing process of the mixture (a continuous process), so that the lithium-silicon oxide particle including the carbon coating may be produced by the single firing process. Accordingly, the carbon coating and the combination of the lithium source and the silicon source may be implemented in the single firing process, so that the $Li_2Si_2O_5$ phase may be sufficiently formed. Additionally, the residual lithium on the surface of the lithium-silicon oxide particle may be reduced and the life-span properties of the lithium secondary battery may be enhanced.

In a comparative example, a carbon-coated silicon oxide may be formed by a first firing, the carbon-coated silicon oxide and the lithium source may be mixed, and then a second firing may be performed to form a cathode active material. In this case, the lithium source may not sufficiently react with the silicon oxide, thereby increasing the residual lithium on the surface of the particle and deteriorating the life-span properties of the lithium secondary battery.

Further, the second firing may be performed after the formation of the carbon coating, thereby damaging the carbon coating on the particle surface and lowering a content of carbon elements on the particle surface. Accordingly, the content of the carbon element on the surface of the lithium-silicon oxide particle measured by the XPS analysis relative to the total number of atoms on the surface of the lithium-silicon oxide particle measured by the XPS analysis may become less than 60 atomic%.

FIG. 1 and FIG. 2 are a schematic plan view and a schematic cross-sectional view, respectively, of a lithium secondary battery in accordance with example embodiments. For example, FIG. 2 is a cross-sectional view taken along a line I-I' of FIG. 1.

Referring to FIGS. 1 and 2, the lithium secondary battery may include an anode 130 including the anode active material and a cathode 100 facing the anode 130.

The cathode 100 may include a cathode current collector 105 and a cathode active material layer 110 disposed on at least one surface of the cathode current collector 105.

The cathode current collector 105 may include stainless steel, nickel, aluminum, titanium, or an alloy thereof. The cathode current collector 105 may include aluminum or stainless-steel surface-treated with carbon, nickel, titanium or silver. For example, the thickness of the cathode current collector 105 may be 10 $\mu$m to 50 $\mu$m.

The cathode active material layer 110 may include a cathode active material. The cathode active material may include a compound capable of reversibly intercalating and deintercalating lithium ions.

The cathode active material for a lithium secondary battery according to example embodiments may include a lithium-nickel metal oxide. The lithium-nickel metal oxide may further include at least one of cobalt (Co), manganese (Mn) and aluminum (Al).

For example, the cathode active material or the lithium-nickel metal oxide may include a layered structure or a crystal structure represented by Chemical Formula 1.

[Chemical Formula 1]     $Li_xNi_aM_bO_{2+z}$

In Chemical Formula 1, $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Chemical Formula 1 indicates a bonding relationship included in the layered structure or the crystal structure of the cathode active material, and is not intended to exclude another additional element. For example, M includes Co and/or Mn, and Co and/or Mn may serve as main active elements of the cathode active material together with Ni. Chemical Formula 1 is provided to express the bonding relationship of the main active elements, and is to be understood as a formula encompassing introduction and substitution of the additional element.

In an embodiment, an auxiliary element for enhancing chemical stability of the cathode active material or the layered structure/crystal structure may be further included in addition to the main active element. The auxiliary element may be incorporated into the layered structure/crystal structure to form a bond, and it is to be understood that this case is also included within the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al which may contribute to capacity/power activity of the cathode active material together with Co or Mn.

For example, the cathode active material or the lithium-transition metal oxide particle may have a layered structure or a crystal structure represented by Chemical Formula 1-1 below.

[Chemical Formula 1-1]   $Li_xNi_aM1_{b1}M2_{b2}O_{2+z}$

In Chemical Formula 1-1, M1 may include Co, Mn and/or Al. M2 may include the above-described auxiliary element. In Chemical Formula 1-1, $0.9 \le x \le 1.2$, $0.6 \le a \le 0.99$, $0.01 \le b1+b2 \le 0.4$, and $-0.5 \le z \le 0.1$.

The cathode active material may further include a coating element or a doping element. For example, an element substantially the same as or similar to the above-mentioned auxiliary element may be used as the coating element or the doping element. For example, one of the above elements or a combination of two or more therefrom may be used as the coating element or the doping element.

The coating element or the doping element may be present on a surface of the lithium-nickel metal oxide particle or may penetrate through the surface of the lithium-transition metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may serve as a transition metal related to power and capacity of a lithium secondary battery. Therefore, as described above, a high-Ni composition may be employed for the cathode active material, so that a high-capacity cathode and a high-capacity lithium secondary battery may be implemented.

However, as the content of Ni increases, long-term storage stability and life-span stability of the cathode or the secondary battery may be relatively deteriorated, and side reactions with an electrolyte may be also increased. However, according to example embodiments, life-span stability and capacity retention may be improved by Mn while maintaining electrical conductivity by the inclusion of Co.

A Ni content (e.g., a mole fraction of nickel among total moles of nickel, cobalt and manganese) in the NCM-based lithium oxide may be 0.5 or more, 0.6 or more, 0.7 or more, or 0.8 or more. In some embodiments, the Ni content may be from 0.8 to 0.95, from 0.82 to 0.95, from 0.83 to 0.95, from 0.84 to 0.95, from 0.85 to 0.95, or from 0.88 to 0.95.

In some embodiments, the cathode active material may include, e.g., a lithium layered oxide (LLO)/OLO (over lithiated oxide)-based active material, a Mn-rich-based active material, a Co-less-based active material, etc., having, e.g., a chemical structure or a crystal structure represented by Chemical Formula 2. These may be used alone or in a combination of two or more therefrom.

[Chemical Formula 2]   $p[Li_2MnO_3] \cdot (1-p)[Li_qJO_2]$

In Formula 2, $0<p<1$, $0.9 \le q \le 1.2$, and J may include at least one element of Mn, Ni, Co, Fe, Cr, V, Cu, Zn, Ti, Al, Mg and B.

A cathode slurry may be prepared by mixing the cathode active material in a solvent. The cathode slurry may be coated on at least one surface of the cathode current collector 105, and then dried and pressed to form the cathode active material layer 110. The coating may include a gravure coating, a slot die coating, a multi-layer simultaneous die coating, an imprinting, a doctor blade coating, a dip coating, a bar coating, a casting, etc. The cathode active material layer 110 may further include a binder, and may optionally further include a conductive material, a thickener, etc.

N-methyl-2-pyrrolidone (NMP), dimethylformamide, dimethylacetamide, N, N-dimethylaminopropylamine, ethylene oxide, tetrahydrofuran, etc., may be used as the solvent.

The binder may include polyvinylidene fluoride (PVDF), vinylidene fluoride-co-hexafluoropropylene copolymer, polyacrylonitrile, polymethylmethacrylate, acrylonitrile butadiene rubber (NBR), polybutadiene rubber (BR), styrene-butadiene rubber (SBR), etc. These may be used alone or in a combination of two or more therefrom.

In one embodiment, a PVDF-based binder may be used as the cathode binder. In this case, an amount of the binder for forming the cathode active material layer 110 may be relatively decreased and an amount of the cathode active material may be relatively increased. Accordingly, power and capacity properties of the secondary battery may be improved.

The conductive material may be added to enhance a conductivity of the cathode active material layer 110 and/or a mobility of lithium ions or electrons. For example, the conductive material may include a carbon-based conductive material such as graphite, carbon black, acetylene black, ketjen black, graphene, carbon nanotube (CNT), vapor-grown carbon fiber (VGCF), carbon fiber, etc., and/or a metal-based conductive material including tin, tin oxide, titanium oxide, a perovskite material such as $LaSrCoO_3$ and $LaSrMnO_3$, etc. These may be used alone or in a combination of two or more therefrom.

For example, the thickener may include carboxymethyl cellulose (CMC).

The anode 130 may include an anode current collector 125 and an anode active material layer 120 formed on at least one surface of the anode current collector 125.

For example, the anode current collector 125 may include a copper foil, a nickel foil, a stainless-steel foil, a titanium foil, a nickel foam, a copper foam, a polymer substrate coated with a conductive metal, etc. These may be used alone or in a combination of two or more from. For example, a thickness of the anode current collector 125 may be 10 $\mu$m to 50 $\mu$m.

The anode active material layer 120 may include the anode active material including the lithium-silicon oxide particles as described above.

An anode slurry may be prepared by mixing the anode active material in a solvent. The anode slurry may be coated/deposited on the anode current collector 105, and then dried and pressed to form the anode active material layer 120. The coating may include a gravure coating, a slot die coating, a multi-layer simultaneous die coating, an imprinting, a doctor blade coating, a dip coating, a bar coating, a casting, etc. The cathode active material layer 120 may further include a binder, and may optionally further include a conductive material, a thickener, etc.

The solvent included in the anode slurry may include water, pure water, deionized water, distilled water, ethanol, isopropanol, methanol, acetone, n-propanol, t-butanol, etc. These may be used alone or in a combination of two or more therefrom.

The above-described materials that may be used in the formation of the cathode 100 may also be used as the binder, the conductive material and the thickener.

In some embodiments, a styrene-butadiene-rubber (SBR)-based binder, carboxymethyl cellulose (CMC), a polyacrylic acid-based binder, poly(3,4-ethylenedioxythiophene) (PEDOT)-based binder, etc., may be used as the anode binder. These may be used alone or in a combination of two or more therefrom.

A separator 140 may be interposed between the cathode 100 and the anode 130. An electrical short circuit between the cathode 100 and the anode 130 may be prevented by the separator 140 while generating an ion flow. For example, a thickness of the separator may be in a range from 10 $\mu$m to 20 $\mu$m.

For example, the separator 140 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer. These may be used alone or in a combination of two or more therefrom.

The porous non-woven fabric may include a high melting point glass fiber, a polyethylene terephthalate fiber, etc.

The separator 140 may include a ceramic-based material. For example, inorganic particles may be coated on the polymer film or dispersed in the polymer film to improve a heat resistance.

The separator 140 may have a single-layered or multi-layered structure including the polymer film and/or the non-woven fabric as described above.

For example, an electrode cell may be defined by a cathode 100, an anode 130 and the separator 140, and a plurality of the electrode cells may be stacked to form an electrode assembly 150 in the form of, e.g., a jelly roll. For example, the electrode assembly 150 may be formed by winding, stacking, zigzag folding, stack-folding, etc., of the separator 140.

The electrode assembly 150 may be accommodated with an electrolyte solution in the case 160 to define a lithium secondary battery. In example embodiments, a non-aqueous electrolyte solution may be used as the electrolyte solution.

The non-aqueous electrolyte solution may include a lithium salt as an electrolyte and an organic solvent, and the lithium salt may be represented as, e.g., $Li^+X^-$. Examples of an anion X' of the lithium salt include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

Examples of the organic solvent include propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted cyclic carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution. In this case, the lithium secondary battery may be manufactured in the form of an all-solid-state battery. Additionally, a solid electrolyte layer may be disposed between the cathode 100 and the anode 130 instead of the separator 140.

The solid electrolyte may include a sulfide-based electrolyte. Non-limiting examples of the sulfide-based electrolyte include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li2O, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, and Z represents Ge, Zn or Ga), $Li_2S$-$GeS_2$, $Li_2S$-$SiS_2$-$Li_3PO_4$, $Li_2S$-$SiS_2$-$Li_pMO_q$, (p and q positive numbers, and M represents P, Si, Ge, B, Al, Ga or In), $Li_7$-$xPS_6$-$xCl_x$ ($0{\le}x{\le}2$), $Li_7$-$xPS_6$-$xBr_x$ ($0{\le}x{\le}2$), $Li_7$-$xPS_6$-$xI_x$ ($0{\le}x{\le}2$), etc. These may be used alone or in combination of two or more therefrom.

In one embodiment, the solid electrolyte may include an oxide-based amorphous solid electrolyte such as $Li_2O$-$B_2O_3$-$P_2O_5$, $Li_2O$-$SiO_2$, $Li_2O$-$B_2O_3$, $Li_2O$-$B_2O_3$-ZnO, etc.

As illustrated in FIGS. 1 and 2, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a prismatic shape, a pouch shape or a coin shape.

Hereinafter, preferred embodiments are proposed to more concretely describe the present invention.

<u>Example 1</u>

<u>Preparation</u> of lithium-silicon <u>oxide particles (single firing process)</u>

A Si powder, a $SiO_2$ powder and a LiOH powder were mixed to form a mixture.

Specifically, the mixture was formed by mixing the powders so that a ratio of the number of moles of lithium elements contained in the LiOH powder to the number of moles of silicon elements contained in the Si powder and $SiO_2$ powder (Li/Si molar ratio) became 0.1.

The Si powder and $SiO_2$ powder were mixed in a weight ratio of 1:1.

The mixture was put into a rotary kiln reactor and fired for 5 hours at a reduced pressure of 10 Pa and a temperature of about 800°C to 1000°C.

During the firing, a methane gas was introduced at a flow rate of 0.5 L/min to 3 L/min under 1 atm in a continuous process to obtain preliminary lithium-silicon oxide particles including a carbon coating.

The preliminary lithium-silicon oxide particles were deposited on an adsorption plate and sufficiently cooled, and the deposited product were collected and pulverized using a ball mill to prepare lithium-silicon oxide particles having the carbon coating at least partially formed on surfaces thereof.

<u>Fabrication of anode</u>

90 wt% of the prepared lithium-silicon oxide particles, 3 wt% of styrene-butadiene rubber (SBR) as a binder, 2 wt% of carbon black (Super C) as a conductive material and 5 wt% of carboxymethyl cellulose (CMC) as a thickener were input and mixed in a deionized water solvent to form an anode slurry.

The anode slurry was coated on a copper substrate, and then dried and pressed to obtain an anode.

Fabrication of lithium half-cell

A lithium half-cell was manufactured including the anode prepared by the above-described method and using a lithium metal as a counter electrode (cathode).

Specifically, a lithium coin half-cell was constructed by interposing a separator (polyethylene, thickness: 20 $\mu$m) between the anode and the lithium metal (thickness: 1 mm).

The assembly of the lithium metal/separator/anode was placed in a coin cell plate, an electrolyte solution was injected, a cap was placed, and then clamped. In the preparation of the electrolyte solution, a 1.0 M $LiPF_6$ solution using a mixed solvent of EC/EMC (3:7; volume ratio) was prepared, and 2.0 vol% of FEC based on a total volume of the electrolyte solution. After the clamping, the coin half-cell was impregnated for 3 to 24 hours, and then charged and discharged for 3 cycles at 0.1C (charge conditions: CC-CV 0.1C 0.01V 0.01C CUT-OFF, discharge conditions: CC 0.1C 1.5V CUT-OFF).

Examples 2 to 8, and Comparative Examples 5 and 6

Lithium-silicon oxide particles, an anode and a lithium half-cell were fabricated by the same method as that in Example 1, except that the phase fraction ratio defined by Equation 1 of the lithium-silicon oxide particle, the content of lithium elements included in the lithium-silicon oxide particle based on the total weight of the lithium-silicon oxide particle, and the Li/Si mole ratio were adjusted as shown in Table 2.

Comparative Example 1 - Two-stage firing process

A raw material including a Si powder and a $SiO_2$ powder was introduced into a reactor, and a first firing was performed at a reduced pressure of 10 Pa and a temperature of 1000°C for 5 hours to form a mixture. The obtained mixture was deposited on an adsorption plate and sufficiently cooled, the deposited product was collected and pulverized using a ball mill to prepare silicon oxide particles in the form of SiO.

10 wt% of soft carbon based on a total weight of the silicon oxide particles of the form of SiO and the lithium-silicon oxide particles was mixed to prepare amorphous carbon-coated silicon oxide particles.

The silicon oxide particles and a LiOH powder were mixed so that a Li/Si molar ratio became 0.1 to form a mixed powder. The mixed powder and zirconia balls were introduced into an airtight container and mixed using a shaker for 30 minutes. Thereafter, the mixed powder was placed in an alumina crucible.

A second firing of the alumina crucible was performed at 800°C for 8 hours in a nitrogen gas atmosphere, and then pulverized to prepare lithium-silicon oxide particles.

An anode and a lithium half-cell were fabricated by the same method as that in Example 1, except that the above-prepared lithium-silicon oxide particles prepared as described above were used as an anode active material.

Comparative Examples 2 to 4

Lithium-silicon oxide particles, an anode and a lithium half-cell were fabricated by the same method as that in Comparative Example 1, except that the phase fraction ratio defined by Equation 1 of the lithium-silicon oxide particle, the content of lithium elements included in the lithium-silicon oxide particle based on the total weight of the lithium-silicon oxide particle, and the Li/Si mole ratio were adjusted as shown in Table 2.

Experimental Example

(1) Measurement of phase fraction ratio

A phase fraction (I(225)) of $Li_2Si_2O_5$ and a phase fraction (I(213)) of $Li_2SiO_3$ were measured by performing a Rietveld analysis through an XRD analysis on the lithium-silicon oxide particles prepared according to Examples and Comparative Examples.

Specifically, an X-ray diffraction pattern was measured by the XRD analysis on the lithium-silicon oxide particles prepared according to Examples and Comparative Examples.

Among the measured X-ray diffraction patterns, data on the $Li_2Si_2O_5$ phase and the $Li_2SiO_3$ phase were compared with the X-ray diffraction patterns of reference codes (ICSD 98-001-5414 and ICSD 98-010-0402) of $Li_2SiO_5$ and $Li_2SiO_3$ registered in an online database (ICSD) to obtain the phase fraction of each of $Li_2Si_2O_5$ and $Li_2SiO_3$.

The phase fraction ratio was calculated by substituting the obtained phase fractions into Equation 1.

Specific XRD analysis equipment/conditions are shown in Table 1 below.

[Table 1]

| XRD(X-Ray Diffractometer) | |
|---|---|
| Maker | PANalytical |
| Model | EMPYREAN |
| Anode material | Cu |
| K-Alpha1 wavelength | 1.540598 Å |
| Generator voltage | 45 kV |
| Tube current | 40 mA |
| Scan Range | 10~70° |
| Scan Step Size | 0.0065° |
| Divergence slit | 1/4° |
| Antiscatter slit | 1° |

(2) XPS Analysis

The lithium-silicon oxide particles prepared according to Examples and Comparative Examples were attached to a carbon tape to prepare samples, and an XPS analysis was performed under the following conditions to measure a lithium element content (a surface Li content) and a carbon element content (a surface C content) on a surface of the lithium-silicon oxide particle based on the total number of atoms on the surface of the lithium-silicon particle.

[XPS analysis conditions]

i) X-ray type: Al k alpha, 1486.68 eV, 900 $\mu$m Beam size
ii) Analyzer: CAE (constant analyzer energy) Mode
iii) Number of scans: 50
iv) Pass energy: 20 eV
v) Dwell Time: 100ms

(3) Measurement of lithium element content

A content of lithium elements was measured through an Inductively Coupled Plasma Spectrometer (ICP) analysis on the lithium-silicon oxide particles prepared according to Examples and Comparative Examples.
Specifically, a lithium-silicon oxide particle sample, nitric acid, and a small amount of hydrofluoric acid were added to a polypropylene (PP) tube, and then sealed. The PP tube was shaken, and left at room temperature to dissolve the sample. Thereafter, the PP tube was stored in a refrigerator to cool the sample. A saturated boric acid water was added to the cooled sample to neutralize hydrofluoric acid, and then diluted with ultrapure water. Carbon components remaining in the sample was removed with a 0.45 $\mu$m syringe filter to obtain an input solution.
The obtained input solution was introduced into an ICP analysis apparatus (NexION 350S, PerkinElmer Co., Ltd.) to measure a lithium element of a lithium element based on a total weight of the lithium-silicon oxide particles.

(4) Evaluation on initial capacity efficiency

Charging (CC-CV 0.1C 0.01 V 0.01C CUT-OFF) and discharging (CC 0.1C 1.5V CUT-OFF) at room temperature (25°C) were each performed once to measure an initial discharge capacity.
The above charging/discharging cycle was performed 10 times to measure a discharge capacity. The measured discharge capacity was divided by the initial discharge capacity to measure an initial capacity efficiency.

(5) Evaluation on capacity retention (50 cycles)

A discharge capacity of each lithium half-cell prepared according to the above-described Examples and Comparative Examples was measured by performing 50 cycles of charging (CC-CV 0.5C 0.01C CUT-OFF) and discharging (CC 0.5C 1.5V CUT-OFF) at room temperature (25°C). An interval of 10 minutes was present between the cycles. A discharge capacity at the 50th cycle was divided by a discharge capacity at the 1st cycle to evaluate a capacity retention as a percentage.

(6) Evaluation of slurry gas generation

3 mL of each anode slurry obtained according to the above-described Examples and Comparative Examples was injected into a syringe having a total volume of 12 mL and then sealed.
After 7 days, whether the volume of the sealed syringe was increased was detected to evaluate a gas generation as follows.

O: Gas generated
X: No Gas Generation

The Li/Si molar ratios and evaluation results are shown in Tables 2 and 3.

[Table 2]

| | phase fraction ratio | XPS analysis | | Li/Si molar ratio | Li element content (wt%) |
|---|---|---|---|---|---|
| | | surface Li content (atomic%) | surface C content (atomic%) | | |
| Example 1 | 0 | 0 | 60 | 0.1 | 1.2 |
| Example 2 | 0.1 | 1.5 | 82 | 0.3 | 3.4 |
| Example 3 | 0.5 | 7.1 | 80 | 0.5 | 6.0 |
| Example 4 | 0.7 | 8.4 | 77 | 0.7 | 8.2 |
| Example 5 | 0 | 3.2 | 67 | 0.1 | 1.3 |
| Example 6 | 0.2 | 2.3 | 81 | 0.09 | 2.1 |
| Example 7 | 0.8 | 9.6 | 75 | 0.8 | 9.5 |
| Example 8 | 0.9 | 9.8 | 76 | 0.95 | 10.2 |
| Comparative Example 1 | 1.1 | 105 | 55 | 0.1 | 10.1 |
| Comparative Example 2 | 1.2 | 11.2 | 55 | 0.3 | 3.5 |
| Comparative Example 3 | 2.8 | 15.4 | 57 | 0.5 | 5.8 |
| Comparative Example 4 | 87.8 | 23.1 | 55 | 0.7 | 8.5 |
| Comparative Example 5 | 0.5 | 13.5 | 50 | 0.5 | 6.0 |
| Comparative Example 6 | 1.1 | 9.7 | 55 | 1.0 | 9.9 |

[Table 3]

| | initial capacity efficiency (%) | capacity retention (%, 50cyc) | slurry gas generation |
|---|---|---|---|
| Example 1 | 85.2 | 89.2 | X |

(continued)

|  | initial capacity efficiency (%) | capacity retention (%, 50cyc) | slurry gas generation |
|---|---|---|---|
| Example 2 | 88.9 | 90.3 | X |
| Example 3 | 90.7 | 92.7 | X |
| Example 4 | 90.5 | 88.6 | X |
| Example 5 | 84.6 | 88.2 | O |
| Example 6 | 88.9 | 91.0 | X |
| Example 7 | 92.2 | 87.9 | X |
| Example 8 | 92.6 | 86.5 | X |
| Comparative Example 1 | 92.1 | 75.2 | O |
| Comparative Example 2 | 91.5 | 70.1 | O |
| Comparative Example 3 | 92.3 | 68.5 | O |
| Comparative Example 4 | 93.5 | 58.2 | O |
| Comparative Example 5 | 90.3 | 86.6 | O |
| Comparative Example 6 | 91.0 | 73.7 | O |

Referring to Tables 2 and 3, in the lithium half-cells of Examples, the capacity retention was generally improved and the gas generation from the anode slurry was suppressed compared to those from the lithium half-cells of Comparative Examples.

In Examples 1 and 5 where the phase fraction ratio was less than 0.1, a relatively small amount of $Li_2SiO_3$ was included, and the initial capacity efficiency was relatively decreased compared to those from other Examples.

In Example 5 where the content of the carbon element based on the total number of atoms on the surface of the lithium-silicon oxide particle measured through the XPS analysis was less than 70 atomic%, the capacity retention was relatively lowered and the gas generation was relatively increased compared to those from other Examples.

In Example 6 where the molar ratio (Li/Si molar ratio) of the lithium and silicon elements were less than 0.1, the initial capacity efficiency was relatively lowered compared to those from other Examples.

In Example 7 the molar ratio (Li/Si mole ratio) of the lithium and silicon elements was greater than 0.7, a residual lithium on the surface of the anode active material was relatively increased, and the capacity retention rate was relatively lowered compared to those from other Examples.

In Example 8 where the content of the lithium element based on the total weight of the lithium-silicon oxide particle was greater than 10 wt%, the residual lithium on the surface of the anode active material was relatively increased, and the capacity retention rate was relatively lowered compared to those from other Examples.

**Claims**

1. An anode active material for a lithium secondary battery comprising a lithium-silicon oxide particle that contains $Li_2Si_2O_5$ and has a phase fraction ratio of 1.0 or less defined by Equation 1,

   wherein a content of lithium elements on a surface of the lithium-silicon oxide particle measured through an X-ray photoelectron spectroscopy (XPS) analysis based on the total number of atoms on the surface of the lithium-silicon oxide particle measured through the XPS analysis is 10 atomic% or less:

   [Equation 1]

   $$\text{Phase fraction ratio} = I(213)/I(225)$$

   wherein, in Equation 1, I(213) is a phase fraction of $Li_2SiO_3$ obtained by a Rietveld Refinement using an X-ray diffraction (XRD) analysis, and I(225) is a phase fraction of $Li_2Si_2O_5$ obtained by the Rietveld Refinement using the XRD analysis.

2. The anode active material for a lithium secondary battery according to claim 1, wherein the phase fraction ratio is in a range from 0.1 to 1.0.

3. The anode active material for a lithium secondary battery according to claim 1 or claim 2, wherein a content of lithium elements contained in the lithium-silicon oxide particle is in a range from 2 wt% to 10 wt% based on a total weight of the lithium-silicon particle.

4. The anode active material for a lithium secondary battery according to any one of claims 1 to 3, wherein the lithium-silicon oxide particle includes a carbon coating formed on at least a portion of a surface portion thereof.

5. The anode active material for a lithium secondary battery of claim 4, wherein a content of carbon elements on the surface of the lithium-silicon oxide particle measured through the XPS analysis based on the total number of atoms on the surface of the lithium-silicon oxide particle measured through the XPS analysis is 70 atomic% or more.

6. The anode active material for a lithium secondary battery according to any one of claims 1 to 5, further comprising a graphite-based particle containing at least one selected from the group consisting of natural graphite and artificial graphite.

7. The anode active material for a lithium secondary battery according to claim 6, wherein a content of the lithium-silicon oxide particle is in a range from 5 wt% to 40 wt% based on a total weight of the lithium-silicon oxide particle and the graphite-based particle.

8. A lithium secondary battery, comprising:

   a cathode; and
   an anode facing the cathode and comprising the anode active material for a lithium secondary battery of any one of claims 1 to 7.

9. A method of preparing an anode active material for a lithium secondary battery, comprising:

   mixing a silicon source and a lithium source to form a mixture; and
   firing the mixture to prepare a lithium-silicon oxide particle containing $Li_2Si_2O_5$,
   wherein the lithium-silicon oxide particle has a phase fraction ratio of 1.0 or less defined by Equation 1:

$$[\text{Equation 1}]$$

$$\text{Phase fraction ratio} = I(213)/I(225)$$

   wherein, in Equation 1, I(213) is a phase fraction of $Li_2SiO_3$ obtained by a Rietveld Refinement using an X-ray diffraction (XRD) analysis, and I(225) is a phase fraction of $Li_2Si_2O_5$ obtained by the Rietveld Refinement using the XRD analysis.

10. The method of claim 9, wherein the silicon source includes a silicon particle and a $SiO_2$ particle.

11. The method of claim 9 or claim 10, wherein the lithium source includes at least one selected from the group consisting of LiOH, Li, LiH, $Li_2O$ and $Li_2CO_3$.

12. The method of any one of claims 9 to 11, wherein a ratio (Li/Si) of the number of moles of lithium elements contained in the lithium source relative to the number of moles of silicon elements contained in the silicon source is in a range from 0.1 to 0.7.

13. The method of any one of claims 9 to 12, further comprising introducing a carbon source gas during the firing to form a carbon coating on at least a portion of a surface of the lithium-silicon oxide particle.

14. The method of claim 13, wherein the carbon source gas includes at least one selected from the group consisting of a methane gas, an ethylene gas, an acetylene gas, an ethane gas, a liquefied petroleum gas and a propylene gas.

15. The method of any one of claims 9 to 14, wherein the firing is performed at a temperature in a range from 800°C to 1000°C.

# FIG. 1

# FIG. 2

Europäisches Patentamt
European Patent Office
Office européen des brevets

## EUROPEAN SEARCH REPORT

Application Number

EP 24 15 8567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/037656 A1 (PARK EUNJUN [KR] ET AL) 3 February 2022 (2022-02-03) * claim 5 * * paragraphs [0006], [0046], [0047] * | 1-15 | INV. C01B33/32 |
| X | US 2021/376311 A1 (MATSUNO TAKUMI [JP] ET AL) 2 December 2021 (2021-12-02) * claims 14, 33 * * paragraphs [0055], [0112], [0134] * | 1-15 | |
| E | EP 4 340 063 A1 (LG ENERGY SOLUTION LTD [KR]) 20 March 2024 (2024-03-20) * claims 1-2, 8-10 * * paragraphs [0091], [0099] - [0101], [0136] * | 1,9-11, 13,14 | |
| E | WO 2024/054035 A1 (LG ENERGY SOLUTION LTD [KR]) 14 March 2024 (2024-03-14) * claims 1, 14, 17 * * paragraph [0146] * | 1,9-11, 15 | |
| | | | TECHNICAL FIELDS SEARCHED (IPC) C01B H01M |

The present search report has been drawn up for all claims

| Place of search | Date of completion of the search | Examiner |
|---|---|---|
| The Hague | 12 September 2024 | Tarallo, Anthony |

EPO FORM 1503 03.82 (P04C01)

## ANNEX TO THE EUROPEAN SEARCH REPORT
## ON EUROPEAN PATENT APPLICATION NO.

EP 24 15 8567

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2024

| Patent document cited in search report | | Publication date | Patent family member(s) | | Publication date |
|---|---|---|---|---|---|
| US 2022037656 | A1 | 03-02-2022 | CN | 114057198 A | 18-02-2022 |
| | | | EP | 3945612 A1 | 02-02-2022 |
| | | | KR | 102286231 B1 | 06-08-2021 |
| | | | KR | 20220014863 A | 07-02-2022 |
| | | | US | 2022037656 A1 | 03-02-2022 |
| US 2021376311 | A1 | 02-12-2021 | CN | 112997339 A | 18-06-2021 |
| | | | EP | 3879608 A1 | 15-09-2021 |
| | | | JP | 7084849 B2 | 15-06-2022 |
| | | | JP | 2020077510 A | 21-05-2020 |
| | | | KR | 20210089653 A | 16-07-2021 |
| | | | TW | 202029558 A | 01-08-2020 |
| | | | US | 2021376311 A1 | 02-12-2021 |
| | | | WO | 2020095558 A1 | 14-05-2020 |
| EP 4340063 | A1 | 20-03-2024 | CN | 117529828 A | 06-02-2024 |
| | | | EP | 4340063 A1 | 20-03-2024 |
| | | | JP | 2024522549 A | 21-06-2024 |
| | | | KR | 20230088286 A | 19-06-2023 |
| | | | US | 2024279074 A1 | 22-08-2024 |
| | | | WO | 2023106882 A1 | 15-06-2023 |
| WO 2024054035 | A1 | 14-03-2024 | EP | 4432394 A1 | 18-09-2024 |
| | | | WO | 2024054035 A1 | 14-03-2024 |

EPO FORM P0459

For more details about this annex : see Official Journal of the European Patent Office, No. 12/82